Europäisches Patentamt

European Patent Office

Office européen des brevets

(19)

(11) Publication number: **0 276 912**
A1

# EUROPEAN PATENT APPLICATION

(21) Application number: 88300127.3

(22) Date of filing: 08.01.88

(51) Int. Cl.4: **A62D 1/04** , A62D 1/02 , C08J 9/30

The title of the invention has been amended (Guidelines for Examination in the EPO, A-III, 7.3).

(30) Priority: 09.01.87 GB 8700498

(43) Date of publication of application:
03.08.88 Bulletin 88/31

(84) Designated Contracting States:
AT BE CH DE ES FR GR IT LI LU NL SE

(71) Applicant: Freeman Chemicals Limited
Polymers Division
P.O. Box 8, 5 Civic Way
Ellesmere Port South Wirral L65 0HB(GB)

(72) Inventor: Parr, Alan James
Coed Y Foel Derwen
Corwen Clwyd(GB)
Inventor: Wosley, Martin
32 Conway Close
Saltney Chester(GB)

(74) Representative: Lyons, Andrew John et al
ROYSTONS 531 Tower Building Water Street
Liverpool L3 1BA(GB)

(54) Foams for fire-fighting, blanketing or vapour suppression.

(57) A foam for use in fire fighting or blanketing, insulating from fire or suppression of vapour is formed by mixing a hydrophilic polymer with an aqueous solution of a foaming agent.

EP 0 276 912 A1

## Foams

This invention concerns foams for use in fire fighting or blanketing, insulating from fire, or suppression of vapour.

Fire fighting or blanketing foams are produced when a foaming agent, such as a detergent, e.g. a fluorocarbon surfactant, is incorporated into water and caused to foam, such as by mechanical agitation. Those foams can be used to extinguish fires or to blanket equipment, vessels or other items or areas to suppress fire or to insulate from fire. Unfortunately, such foams have a limited life and may be easily blown away or may collapse under the influence of heat.

One object of the invention is to provide a foam for use in fire fighting that may remain stable for extended periods and also at elevated temperatures.

Another object of the invention is to provide a temporary insulating foam that will remain stable and tacky and adhere to surfaces during a fire fighting operation.

A further object of the invention is to provide a stable impermeable foam for suppressing hazardous vapours.

According to the invention there is provided a foam formed by mixing a hydrophilic polymer with an aqueous solution of a foaming agent.

The hydrophilic polymer may be used in an amount of 2 to 50% preferably 4 to 50%, especially 4 to 20% and more especially 4 to 15% by weight of the total compaction.

The hydrophilic polymer acts as a stabiliser for the foam by causing it to gel.

The invention also provides a method of fire fighting, fire insulation or vapour suppression comprising applying a foam formed by mixing a hydrophilic polymer and an aqueous solution of a foaming agent.

To produce the foam of the invention a solution of foaming agent and water may be mixed with the hydrophilic polymer for typically 30 seconds and then foamed by agitation for a further short period, typically 15 seconds. The foamed mixture forms a stable gelled foam which may be resistant to solvents, such as ethanol and acetone, and may show excellent flame resistance.

For practical fire fighting, insulating or vapour suppresion purposes it is envisaged that an aqueous foaming agent and the hydrophilic polymer will be supplied separately to a foaming device from whence the foamed mixture will be sprayed where desired.

Alternatively a single part foam solution may be used which incorporates a hydrophilic polymer which remains stable until activated by heat.

Any suitable gel forming hydrophilic polymer or mixture of polymers may be used in the invention. Examples of suitable hydrophilic polymers include polyisocyanates, acrylic based polymers and cellulose based polymers.

Preferred gels used in this invention possess a three-dimensional polymer network produced by reacting a water miscible polyisocyanate prepolymer with an aqeuous solution of a foaming agent. The polyisocyanate prepolymer may be produced by end-capping a suitable water miscible polyol with a diisocyanate to give a final isocyanate functionality preferably greater than two. Typically the water miscible polyol is the product of the polymerisation of ethylene oxide with or without propylene oxide in the presence of a polyfunctional precursor such as glycerine. The average molecular weight of the water miscible polyol is preferably in the range 200-20,000, especially 600-6,000, with a hydroxyl functionality of two or more and preferably containing at least 40% by weight of ethylene oxide adducts. The diisocyanate may typically be one of toluene diisocyanate (TDI), 4,4'-diphenylmethane diisocyanate (MDI), hexamethylene diisocyanate (HDI) or isophorone diisocyanate (IPDI). The polyisocyanate prepolymer may be produced by reacting 0.55-1.5, preferably 0.75-1.25, moles of diisocyanate with each equivalent of hydroxyl group in the water miscible polyol.

The proportion of water in the gels is preferably designed to give a Water Index Value in the range 14,000-350,000, especially 80,000-300,000, where:

$$\text{Water Index Value} = \frac{\text{Equivalents of Water} \times 100}{\text{Equivalents of Isocyanate}}$$

When the polyisocyanate prepolymer is blended with the aqueous forming agent, mix times, dependent on the gel time of the system, are typically in the range of 10 to 60 seconds. Gel times are a function of the Water Index Value, the nature of any added substances and the temperature of the reactants and are typically 30 seconds to 5 minutes. Gel times are longer at lower temperatures.

When the polyisocyanate prepolymer is rendered inactive by prior reaction of the isocyanate groups with a suitable blocking agent, a single part foam solution is possible which is liquid at 25 degrees C but which can be caused to gel under the influence of heat, such as by spraying on to a fire or by passing through a pre-heated line. Suitable blocking agents known to the art include phenols, amines and oximes.

Preferred foaming agents include fluorocarbon surfactants and the aqueous foaming agent may contain other suitable substances, such as an intumescing substance.

The invention will now be further described by means of the following Examples:

EXAMPLE 1 (comparative)

A foam was made by mechanically agitating a mixture of 2% by weight of fluorocarbon surfactant and 98% by weight water.

EXAMPLE 2

A foam was made by first forming a hydrophilic polyisocyanate prepolymer by reacting 11.15% by weight of toluene diisocyanate (80/20 mixture of 2,4/2,6 isomers) with 88.85% by weight of a 5000 molecular weight trifunctional polyol based on glycerine, extended with propylene oxide and capped with ethylene oxide. The resultant prepolymer contained 3.2% by weight of isocyanate (as NCO). A foam was made by mechanically agitating a mixture of 98 parts of a 2% by weight solution of a fluorocarbon surfactant in water with 2 parts of the polyisocyanate prepolymer added just prior to agitation.

EXAMPLE 3

This Example repeated Example 2 except that 96 parts of a 2% by weight solution of a fluorocarbon surfactant in water were mixed and agitated with 4 parts of polyisocyanate prepolymer.

EXAMPLE 4

This Example repeated Example 2 except that 94 parts of a 2% by weight solution of a fluorocarbon surfactant in water were mixed and agitated with 6 parts of polyisocyanate prepolymer.

EXAMPLE 5

This Example repeated Example 2 except that 92 parts of a 2% by weight solution of a fluorocarbon surfactant in water were mixed and agitated with 8 parts of polyisocyanate prepolymer.

EXAMPLE 6

This Example repeated Example 2 except that 90 parts of a 2% by weight solution of a fluorocarbon surfactant in wate were mixed and agitated with 10 parts of polyisocyanate prepolymer.

The stability of the foams of Examples 1-6 was tested at 25 degress C and at 70 degrees C. The results are given in the Table below.

## TABLE

| Example No. | Stability at 25 C | Stability at 70 C |
|---|---|---|
| 1 | Collapsed to half volume in 3 hours | Collapsed in 1 hour |
| 2 | Collapsed in 15 mins | Collapsed in 5 mins |
| 3 to 6 | Stable for at least 6 months | Some shrinkage after 12 hours but the basic structure of the foam is retained |

The foam of Example 5 appeared to be particularly beneficial.

EXAMPLE 7

The foam made according to Example 5 was added to ethanol The foam floated on the surface and was still intact after two weeks.

EXAMPLE 8

The foam made according to Example 5 was added to acetone. The foam floated on the surface and was still intact after two weeks.

EXAMPLE 9

The foam made according to Example 5 was exposed to the direct heat of a blow torch for 5 minutes. There was slight charring of the surface but otherwise no significant change. The foam did not ignite.

EXAMPLE 10

A stable solution of a blocked prepolymer was made by first reacting 93.48% by weight of a polyisocyanate prepolymer containing 3.2% by weight of isocyanate (as NCO) with 6.52% by weight of methyl ethyl ketoxime. When 8 parts of this blocked prepolymer was mixed with 92 parts of a 2% by weight solution of a fluorocarbon surfactant in water a homogeneous solution was obtained which remained unchanged for a minimum of 6 months at 25 degrees C. When this solution was heated to 100 degrees C over a period of one hour it set to a solid gel.

**Claims**

1. A foam formed by mixing a hydrophilic polymer with an aqueous solution of a foaming agent.

2. A foam as claimed in claim 1, characterized in that the amount of hydrophilic polymer used is 4 to 15% by weight.

3. A foam as claimed in claim 1 or claim 2, characterised in that the hydrophillic polymer is selected from polyisocyanates, acrylic based polymers and cellulose based polymers.

4. A foam as claimed in claim 3, characterised in that the polyisocyanate is a prepolymer produced by end capping a water miscible polyol with a diisocyanate.

5. A foam as claimed in claim 4, characterised in that water-miscible polyol is the product of the polymerisation of ethylene oxide with or without propylene oxide in the presence of a polyfunctional precursor such as glycerine.

6. A foam as claimed in claim 4 or 5, characterised in that the average molecular weight of the water miscible polyol is in the range 200 to 20,000, preferably 600 to 6,000.

7. A foam as claimed in claims 5 or 6, characterised in that the water miscible polyol contains at least 40% by weight of ethylene oxide adducts.

8. A foam as claimed in any one of claims 4 to 7, characterised in that the diisocyanate is selected from toluene diisocyanate, 4, 4′ -diphenylmethane diisocyanate, hexamethylene diisocyanate, and isophorone diisocyanate.

9. A foam as claimed in any one of claims 4 to 8, characterised in that the polyisocyanate prepolymer is produced by reacting 0.55 to 1.5 preferably 0.75 to 1.25, moles of diisocyanate with each equivalent of hydroxyl group in the water miscible polyol.

10. A foam as claimed in any one of claims 4 to 9, characterised in that the proportion amount of water mixed with the polyisocyanate prepolymer is designed to give a water index value (as hereinbefore defined) of 14,000 to 350,000, preferably 80,000 to 300,000.

11. A foam as claimed in any one of claims 4 to 10, characterised by being produced from a polyisocyanate prepolymer having its isocyanate groups blocked, unblocking of said isocyanate groups being by means of heat.

12. A foam as claimed in any one of claims 1 to 11, characterised in that the foaming agent is a fluorocarbon surfactant.

European Patent Office

# EUROPEAN SEARCH REPORT

Application Number

EP 88 30 0127

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 435 200  (ICI)<br>* Page 1, line 5 - page 2, line 5; page 3, lines 64,65; claims * | 1-3,12<br>- | A 62 D   1/04<br>A 62 D   1/02<br>C 08 J   9/30 |
| X | GB-B-1 381 953  (PHILADELPHIA SUBURBAN CORP.)<br>* Page 7, line 41 - page 8, line 9; claims * | 1-3,12 | |
| X | DE-C-  861 794  (TOTAL KOMMANDITGESELLSCHAFT FOERSTNER)<br>* Whole document * | 1-3 | |
| X | GB-A-1 071 660  (THE PYRENE CO. LTD)<br>* Claims * | 1,3 | |
| X | CHEMICAL ABSTRACTS, vol. 95, no. 24, 14th December 1981, page 143, abstract no. 206336j, Columbus, Ohio, US; & JP-A-81 75 179 (MIYATA INDUSTRY CO. LTD) 22-06-1981<br>* Abstract * | 1,3,12 | |
| Y | US-A-3 581 826  (T.P. DOUGAN et al.)<br>* Column 2, line 12 - column 3, line 40; column 3, line 64 - column 4, line 48; claims * | 1-12 | TECHNICAL FIELDS SEARCHED (Int. Cl.4)<br><br>A 62 D<br>C 08 J |
| Y | CHEMICAL ABSTRACTS, vol. 86, no. 14, 4th April 1977, page 77, abstract no. 91243w, Columbus, Ohio, US; & JP-A-76 123 298 (DAINIPPON INK AND CHEMICALS INC.) 27-10-1976<br>* Abstract *<br>                ---                    -/- | 1-12 | |

The present search report has been drawn up for all claims

| Place of search | Date of completion of the search | Examiner |
|---|---|---|
| THE HAGUE | 19-04-1988 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 422 438 (PHILADELPHIA SUBURBAN CORP.)<br>* Claims *<br>--- | 1-12 | |
| A | GB-A-1 333 088 (DUNLOP HOLDINGS LTD)<br>* Column 2, lines 20-62; claims 1-21 *<br>----- | 1-12 | |

TECHNICAL FIELDS SEARCHED (Int. Cl.4)

The present search report has been drawn up for all claims

| Place of search | Date of completion of the search | Examiner |
|---|---|---|
| THE HAGUE | 19-04-1988 | FLETCHER A.S. |